# EUROPEAN PATENT SPECIFICATION

(11) **EP 3 940 464 B1**
(45) Date of publication and mention of the grant of the patent: **26.02.2025**
(21) Application number: 21195830.1
(22) Date of filing: 29.08.2016
(51) Int. Cl.: G05B 19/00, B29C 33/00, B29C 39/00, B29C 39/22, B29C 39/26, B29C 39/36

(54) **ENGINES CAST FROM SINGLE-PIECE CORES**
AUS EINTEILIGEN KERNEN GEGOSSENE MOTOREN
MOTEURS COULÉS À PARTIR DE NOYAUX EN UNE SEULE PIÈCE

(30) Priority: 31.08.2015 US 201562212057 P
(43) Date of publication of application: 19.01.2022
(62) Divisional of application: 16842753.2
(73) Proprietor: Cummins, Inc., Columbus, Indiana 47201 (US)
(72) Inventor: LEE, Lawrence, Freetown, 47235 (US); JONES, John, Windermere, 34786 (US); VOGEL, Brian, Scipio, 47273 (US); LAMONCHA, Brandon, Youngstown, 44512 (US); LAMONCHA, Bronson, Dover, 03820 (US)
(74) Representative: Marks & Clerk Cummins

(56) References cited:
- PROMETALRCT: "Rapid Prototyping and Digital Sand Casting Services", YOUTUBE, 19 October 2010 (2010-10-19), pages 1, XP054978805, Retrieved from the Internet <URL:https://www.youtube.com/watch?v=Z8MaVaqNr3U> [retrieved on 20181022]
- VOXELJET: "Sand casting: Digital production of complex sand moulds by voxeljet", YOUTUBE, 29 November 2012 (2012-11-29), pages 1, XP054978998, Retrieved from the Internet <URL:https://www.youtube.com/watch?v=bJJ50g4Pi2w> [retrieved on 20190107]
- FORD MEDIA: "Ford 3D Printing", YOUTUBE, 5 November 2013 (2013-11-05), XP054979118, Retrieved from the Internet <URL:https://www.youtube.com/watch?v=WTLvpCeyKso> [retrieved on 20190130]

## Description

### TECHNICAL FIELD

The present disclosure relates to internal combustion engines.

### BACKGROUND

Cast engine components are often created using molds and cores. Cores for a given engine are often created in a piecemeal manner, where each core corresponds to a chamber or conduit within the engine. The use of piecemeal cores in the casting process often entails several disadvantages, including casting variance resulting from assembling an engine core from several piecemeal cores. Another disadvantage involves requiring drafts, which can result in suboptimal core configurations and unnecessary weight. Further, casting with piecemeal cores can be cumbersome, entailing high development times, increased modeling time and complexity, and other issues.

A video entitled "Rapid Prototyping and Digital Sand Casting Services", having URL: https://www.youtube.com/watch?v=Z8MaVaqNr3U, depicts the casting of engine components using molds and cores.

A video entitled "Sand casting: Digital production of complex sand moulds by voxeljet", having URL: https://www.youtube.com/watch?v=bJJ50g4Pi2w, also depicts the casing of a metal component.

A video entitled "Ford 3D Printing - Official Promo", having URL: https://www.youtube.com/watch?v=WTLvpCeyKso, also depicts the casting of engine components using molds and cores.

### SUMMARY

According to a first aspect of the invention there is provided a casting process for manufacturing an engine as specified in claim 1.

It should be appreciated that all combinations of the foregoing concepts and additional concepts discussed in greater detail below (provided such concepts are not mutually inconsistent) are contemplated as being part of the inventive subject matter disclosed herein. In particular, all combinations of claimed subject matter appearing at the end of this disclosure are contemplated as being part of the inventive subject matter disclosed herein.

### BRIEF DESCRIPTION OF THE DRAWINGS

The skilled artisan will understand that the drawings primarily are for illustrative purposes and are not intended to limit the scope of the subject matter described herein. The drawings are not necessarily to scale; in some instances, various aspects of the subject matter disclosed herein may be shown exaggerated or enlarged in the drawings to facilitate an understanding of different features. In the drawings, like reference characters generally refer to like features (e.g., functionally similar and/or structurally similar elements).
FIG. 1 shows a perspective view of an engine, according to an example embodiment.
FIG. 2 shows an exploded diagram of various piecemeal cores prior to final assembly in a conventional assembly process.
FIG. 3 shows a perspective view of a single piece core, according to an example embodiment.
FIG. 4 shows a flow diagram of a method of casting an engine using a single piece core, according to an example embodiment.

The features and advantages of the inventive concepts disclosed herein will become more apparent from the detailed description set forth below when taken in conjunction with the drawings.

### DETAILED DESCRIPTION

Following below are more detailed descriptions of various concepts related to, and embodiments of, inventive single-piece engine casting cores and methods of casting using single-piece cores. It should be appreciated that various concepts introduced above and discussed in greater detail below may be implemented in any of numerous ways, as the disclosed concepts are not limited to any particular manner of implementation. Examples of specific implementations and applications are provided primarily for illustrative purposes.

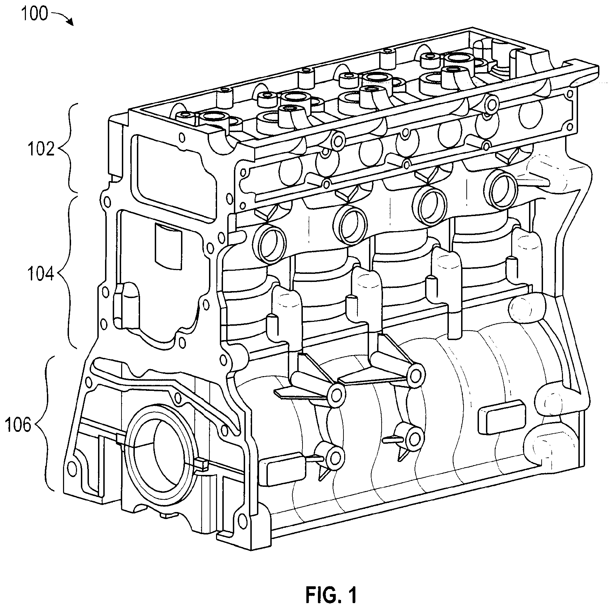

Referring to FIG. 1, an engine 100 is configured to cyclically collect and ignite controlled volumes of air and fuel (e.g., gasoline, diesel, natural gas, and so on) to generate a mechanical force. The engine 100 includes a cylinder head portion 102, a block portion 104, and a crankcase portion 106. In various embodiments, each of the portions in the engine 100 includes a variety of chambers, channels, jackets, ports and other internal features within. For example, some of the internal features route air through the engine 100, other features route fuel through the engine 100, and yet other features serve supporting roles (e.g., housing a crank, housing pistons, routing cooling media, etc.).

For example, the cylinder head portion 102 may include a plurality of ports configured to house a corresponding plurality of valves. The block portion 104 includes a plurality of cylinders configured to house a corresponding plurality of pistons, such that each of the plurality of cylinders is in fluid receiving and providing communication with the plurality of ports in the cylinder head portion 102. The crankcase portion 106 includes a cavity configured to house a crankshaft and associated rods operatively engaged to the plurality of pistons in the block portion 104.

In arrangements in accordance with conventional manufacturing and assembly processes, the cylinder head portion 102 and the block portion 104 are manufactured separately (e.g., by casting), and then removably coupled to each other. A leak-proof seal may be provided by a deformable gasket disposed at an interface between the cylinder head portion 102 and the block portion 104. However, the gasket may fail over the course of operation of the engine 100. Therefore periodically replacing the gasket is a commonly required service event in engines assembled in accordance with conventional processes.

The engine 100 may be manufactured through a casting process. In such a process, a material in a liquid state (e.g., molten iron) is poured into mold and then allowed to solidify, giving rise to a cast having an external shape corresponding to the internal shape of the mold. The cast may be removed from the mold by breaking or otherwise dismantling the mold.

Where the desired cast includes one or more internal features (e.g., a cylinder), one or more corresponding cores may be utilized in conjunction with a mold in the casting process. A core is an object having an external shape that corresponds to an internal shape of a cast. As such, one or more cores may be positioned within a mold during a casting process, such that a resulting cast has an exterior shape corresponding to the interior shape of the mold, as well as interior features corresponding to each of the one or more cores.

The core may be made from any of a variety of approaches, including the use of green sand cores, dry sand cores, lost cores, which may be used in conjunction with one or more binders (e.g., synthetic oils). Alternatively, cores may be produced from a three-dimensional printing process, for example via an extrusion process or through the use of a powder bed.

The mold and each of the cores may be made by first generating a digital three-dimensional model of the mold or core. The model may be generated as a computer-aided design ("CAD") file, through a three dimensional scanner, through a digital camera with accompanying photogrammetry software, and so on. Models are commonly generated through the use of computing systems having one or more processors operatively coupled to a non-transient data storage medium and performing operations determined by various software applications stored therein. The model may then be used to provide production specifications for the mold and/or the cores, for example to be used in a three-dimensional printing process.

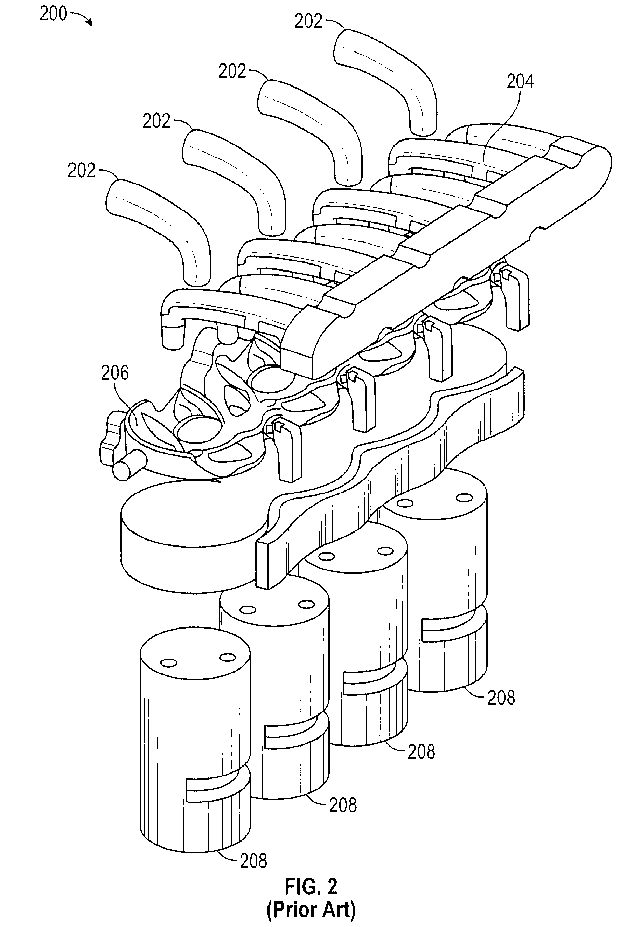

FIG. 2 shows a plurality of individual cores 200 prior to final assembly in a conventional assembly process. Each of the plurality of individual cores 200 corresponds with some hollow interior aspect of the engine 100 shown in FIG. 1. For example, in the arrangement shown, the plurality of individual cores 200 includes a set of exhaust port cores 202, a set of intake port cores 204, a water jacket core 206, and a set of cylinder cores 208. As such, the plurality of cores 200 may be used in a casting process to create exhaust ports, intake ports, a water jacket, and cylinders within an engine cast, respectively. However, as one of skill in the art would recognize, each of the plurality of cores 200 needs to be separately created, and ultimately assembled into one or more core systems to create the intended interior features of an engine cast. As such, variance can occur across core systems (e.g., due to variance in an assembly process) or even across individual cores (i.e., producing varying internal features from cast to cast). Further, the need to assemble individual cores may require casting the cylinder head portion 102 separately from the block portion 104. As discussed above, joining a cylinder head portion 102 with a separate block portion 104 entails several disadvantages, including requiring gasket service, reduced cylinder pressures, and so on.

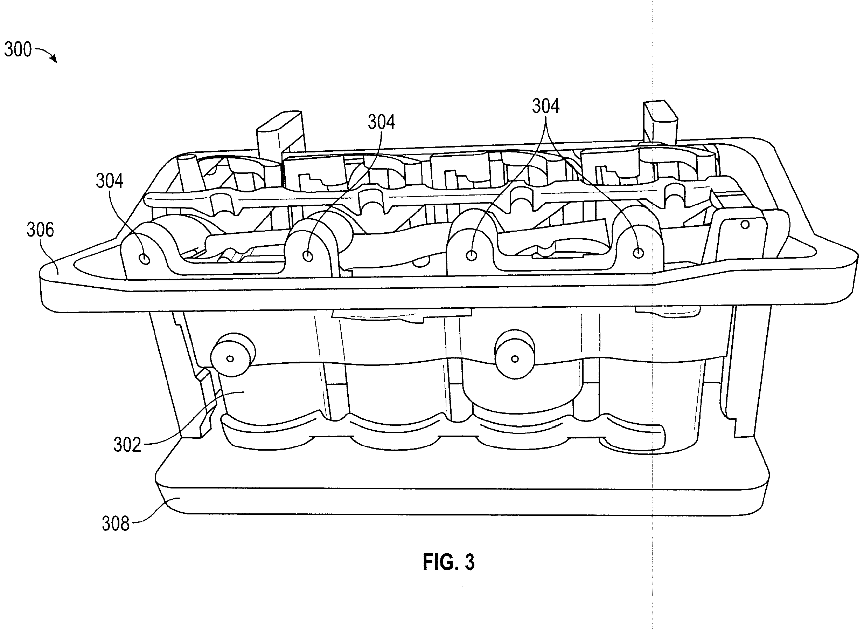

An example of a single-piece core 300 according to various embodiments is shown in FIG. 3. In one arrangement, the single-piece core 300 results from a digital three-dimensional model and is formed via a three-dimensional printing process as a single piece. The single-piece core 300 includes a combined cylinder head and block core 302, which includes sections corresponding to each hollow feature within the cylinder head portion 102 and the block portion 104 of the engine 100. As such, a cast created from the single-piece core 300 does not include an interface between the cylinder head portion 102 and the block portion 104 (i.e., no head gasket would be needed). Monolithic cylinder head and block casts produced from combined cylinder head and block core 302 may therefore exhibit improved stability and resistance to mechanical and thermal stresses in operation.

In addition, as a single piece is printed from a three-dimensional printing process, core systems do not need to be assembled from a plurality of smaller cores, increasing consistency in production. The single-piece core 300 may be created by, for example, designing a CAD file such that each section of the single-piece core 300 is connected to another section of the core.

The combined cylinder head and block core 302 may be formed without any drafts, which may otherwise be needed in prior art arrangements incorporating a plurality of smaller cores. Further, core sections corresponding to weight reduction pockets in a cast engine may be formed into the combined cylinder head and block core 302 with increased precision and accuracy compared to the prior art.

The combined cylinder head and block core 302 may also include a plurality of gas vents 304 formed into various core sections. For example, core sections corresponding to exhaust ports may be formed to include the gas vents 304. The gas vents 304 are configured to provide an avenue of gas flow through the combined cylinder head and block core 302 during the casting process, thereby reducing gas porosity. Further, because the gas vents 304 are integrated into the single-piece core (e.g., is included in a corresponding CAD file), the gas vents 304 do not need to be drilled into core sections after the core has been formed (i.e., as would be needed in prior art arrangements).

In some arrangements, the single-piece core 300 includes accessory features formed along with the combined cylinder head and block core 302. For example, the single-piece core 300 may include a tie bar 306 formed around a periphery of the combined cylinder head and block core 302, and a base 308 formed at a bottom portion of the cylinder head and block core 302. The tie bar 306 may serve as a mounting point for packaging and shipping containers (e.g., to secure the single-piece core 300 within a shipping container). The base 308 may serve as a point of contact with the ground, such that any wear and tear during transit or storage is inflicted on the base 308 as opposed to a bottom portion of the combined cylinder head and block core 302.

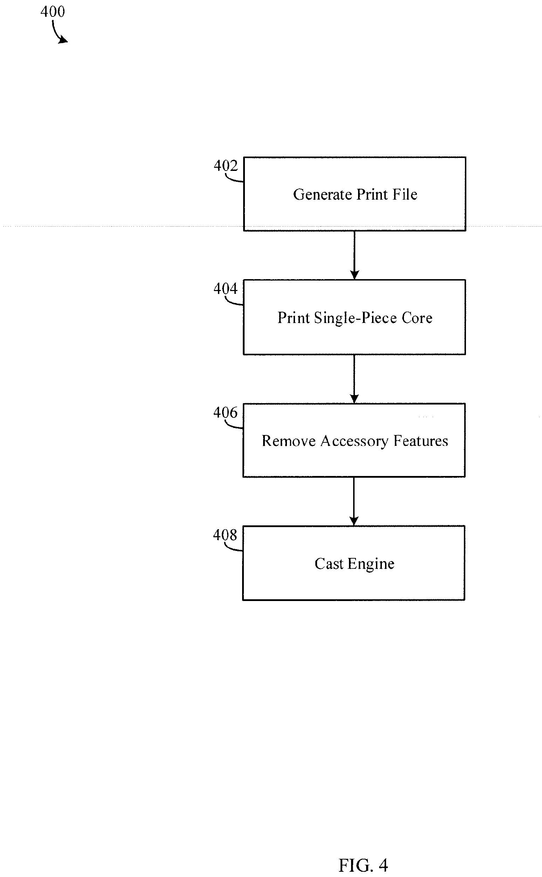

Referring now to FIG. 4, a flow diagram of a method of manufacturing engines in accordance with example embodiments is shown. Engines are manufactured using single-piece cores (e.g., the single-piece core 300) formed from a three-dimensional printing process, as described above.

At 402, a three-dimensional print file is generated. The three-dimensional print file is generated as, for example, a CAD file, a three-dimensional scan, or one or more processed digital photographs. The three-dimensional print file is generated to include specifications for core sections corresponding to each hollow feature within a desired engine cast. In some arrangements, the three-dimensional print file includes specifications for a combined cylinder head and block core (e.g., the combined cylinder head and block core 302), configured to be used to produce a single-piece, combined cylinder head and block cast. Further, in some arrangements, the three-dimensional print file includes specifications for one or more accessory features (e.g., the tie bar 306, the base 308, etc.), and/or gas vents.

At 404, a single-piece core (e.g., the single-piece core 300) is printed. The single-piece core is printed in accordance with a three-dimensional print file (e.g., as generated at 402). The single-piece core may be printed using a three-dimensional printing process, for example via the use of a powder bed or through an extrusion process.

At 406, where specifications were included in a three-dimensional print file and printed at 404, accessory features (e.g., the tie bar 306, the base 308, etc.) are removed. The accessory features may be removed by, for example, cutting (e.g., sawing), grinding, or breaking off the accessory features.

At 408, an engine (e.g., the engine 100) is cast. The engine is cast using the single-piece core printed at 404 disposed in a mold. A liquid casting media (e.g., molten metal) may be poured into the mold and allowed to cool and solidify. The mold may then be broken apart or otherwise dismantled, and the core may be disintegrated and removed from the interior of the engine.

For the purpose of this disclosure, the term "coupled" means the joining of two members directly or indirectly to one another. Such joining may be stationary or moveable in nature. Such joining may be achieved with the two members or the two members and any additional intermediate members being integrally formed as a single unitary body with one another or with the two members or the two members and any additional intermediate members being attached to one another. Such joining may be permanent in nature or may be removable or releasable in nature.

It should be noted that the orientation of various elements may differ according to other exemplary embodiments, and that such variations are intended to be encompassed by the present disclosure. It is recognized that features of the disclosed embodiments can be incorporated into other disclosed embodiments.

It is important to note that the constructions and arrangements of apparatuses or the components thereof as shown in the various exemplary embodiments are illustrative only. Although only a few embodiments have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter disclosed. For example, elements shown as integrally formed may be constructed of multiple parts or elements, the position of elements may be reversed or otherwise varied, and the nature or number of discrete elements or positions may be altered or varied. The order or sequence of any process or method steps may be varied or re-sequenced according to alternative embodiments. Other substitutions, modifications, changes and omissions may also be made in the design, operating conditions and arrangement of the various exemplary embodiments without departing from the scope of the present disclosure.

While various inventive embodiments have been described and illustrated herein, those of ordinary skill in the art will readily envision a variety of other mechanisms and/or structures for performing the function and/or obtaining the results and/or one or more of the advantages described herein, and each of such variations and/or modifications is deemed to be within the scope of the inventive embodiments described herein. More generally, those skilled in the art will readily appreciate that, unless otherwise noted, any parameters, dimensions, materials, and configurations described herein are meant to be exemplary and that the actual parameters, dimensions, materials, and/or configurations will depend upon the specific application or applications for which the inventive teachings is/are used. Those skilled in the art will recognize, or be able to ascertain using no more than routine experimentation, many equivalents to the specific inventive embodiments described herein. It is, therefore, to be understood that the foregoing embodiments are presented by way of example only and that, within the scope of the appended claims and equivalents thereto, inventive embodiments may be practiced otherwise than as specifically described and claimed. Inventive embodiments of the present disclosure are directed to each individual feature, system, article, material, kit, and/or method described herein. In addition, any combination of two or more such features, systems, articles, materials, kits, and/or methods, if such features, systems, articles, materials, kits, and/or methods are not mutually inconsistent, is included within the inventive scope of the present disclosure.

Also, the technology described herein may be embodied as a method, of which at least one example has been provided. The acts performed as part of the method may be ordered in any suitable way unless otherwise specifically noted. Accordingly, embodiments may be constructed in which acts are performed in an order different than illustrated, which may include performing some acts simultaneously, even though shown as sequential acts in illustrative embodiments.

Implementations (and portions thereof) described in this specification can be implemented in digital electronic circuitry, or in computer software, firmware, or hardware, including the structures disclosed in this specification and their structural equivalents, or in combinations of one or more of them. The implementations described in this specification can be implemented as one or more computer programs, i.e., one or more sets of computer program instructions, encoded on one or more computer storage media for execution by, or to control the operation of, data processing apparatus. Alternatively or in addition, the program instructions can be encoded on an artificially-generated propagated signal, e.g., a machine-generated electrical, optical, or electromagnetic signal that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate components or media (e.g., multiple CDs, disks, or other storage devices). Accordingly, the computer storage medium is both tangible and non-transitory.

The operations described in this specification can be performed by a controller or a data processing apparatus on data stored on one or more computer-readable storage devices or received from other sources. The term "data processing apparatus" or "controller" encompasses all kinds of apparatus, devices, and machines for processing data, including by way of example a programmable processor, a computer, a system on a chip, or multiple ones, or combinations of the foregoing. The apparatus can include special purpose logic circuitry, e.g., an FPGA (field programmable gate array) or an ASIC (application-specific integrated circuit). The apparatus can also include, in addition to hardware, code that creates an execution environment for a computer program, e.g., code that constitutes processor firmware, a protocol stack, a database management system, an operating system, a cross-platform runtime environment, a virtual machine, or a combination of one or more of them.

## Claims

1. A casting process for manufacturing an engine (100), the casting process comprising:
pouring a material in liquid state into a mold around a single-piece core (300) within the mold, wherein an internal shape of the mold corresponds to an external shape of the engine (100), and wherein an external shape of the single-piece core (300) corresponds to an internal shape of the engine (100); and
solidifying the material to create a cast having an external shape corresponding to the internal shape of the mold, and having an internal shape corresponding to the external shape of the single-piece core (300).

2. The casting process of claim 1, wherein the engine (100) comprises a cylinder head portion (102) and block portion (104).

3. The casting process of claim 2, wherein the external shape of the single-piece core (300) corresponds to a combination of an internal shape of the cylinder head portion (102) and an internal shape of the block portion (104).

4. The casting process of claims 2 or 3, wherein the internal shape of the mold corresponds to a combination of an internal shape of the cylinder head portion (102) and an internal shape of the block portion (104).

5. The casting process of any preceding claim, further comprising generating the single-piece core (300) by printing the single-piece core (300) according to specifications in a three-dimensional print file.

6. The casting process of claim 5, wherein the specifications correspond to each hollow interior feature of the engine (100).

7. The casting process of claims 5 or 6, wherein the three-dimensional print file includes specifications for one or more accessory features (306, 308), and wherein the single-piece core (300) is printed to include the one or more accessory features (306, 308).

8. The casting process of claim 7, further comprising removing the one or more accessory features (306, 308) from the single-piece core (300) prior to pouring the material into the mold.

9. The casting process of claims 7 or 8, wherein the one or more accessory features (306, 308) includes a base (308).

10. The casting process of any one of claims 7 to 9, wherein the one or more accessory features (306, 308) includes a tie bar (306).

11. The casting process of any one of claims 7 to 10, wherein the three-dimensional print file includes specifications for a combined cylinder head and block core (302), and wherein the single-piece core (300) includes the combined cylinder head and block core (302).

12. The casting process of any one of claims 7 to 11, wherein the three-dimensional print file includes specifications for a plurality of gas vents (304) disposed through the single-piece core (300), and wherein the single-piece core (300) is printed to include the plurality of gas vents (304).

## Patentansprüche

1. Gussverfahren zum Herstellen eines Motors (100), wobei das Gussverfahren Folgendes umfasst:
Eingießen eines Materials im flüssigem Zustand in eine Form um einen einteiligen Kern (300) herum innerhalb der Form, wobei eine innere Gestalt der Form einer äußeren Gestalt des Motors (100) entspricht, und wobei eine äußere Gestalt des einteiligen Kerns (300) einer inneren Gestalt des Motors (100) entspricht; und
Verfestigen des Materials um einen Guss zu schaffen, der eine äußere Gestalt aufweist, die der inneren Gestalt der Form entspricht, und der eine innere Gestalt aufweist, die der äußeren Gestalt des einteiligen Kerns (300) entspricht.

2. Gussverfahren nach Anspruch 1, wobei der Motor (100) einen Zylinderkopfabschnitt (102) und einen Blockabschnitt (104) umfasst.

3. Gussverfahren nach Anspruch 2, wobei die äußere Gestalt des einteiligen Kerns (300) einer Kombination aus einer inneren Gestalt des Zylinderkopfabschnitts (102) und einer inneren Gestalt des Blockabschnitts (104) entspricht.

4. Gussverfahren nach Anspruch 2 oder 3, wobei die innere Gestalt der Form einer Kombination aus einer inneren Gestalt des Zylinderkopfabschnitts (102) und einer inneren Gestalt des Blockabschnitts (104) entspricht.

5. Gussverfahren nach einem der vorhergehenden Ansprüche, ferner umfassend das Erzeugen des einteiligen Kerns (300) durch Drucken des einteiligen Kerns (300) gemäß Spezifikationen in einer dreidimensionalen Druckdatei.

6. Gussverfahren nach Anspruch 5, wobei die Spezifikationen jedem hohlen Innenmerkmal des Motors (100) entsprechen.

7. Gussverfahren nach Anspruch 5 oder 6, wobei die dreidimensionale Druckdatei Spezifikationen für ein oder mehrere Hilfsmerkmale (306, 308) einschließt, und wobei der einteilige Kern (300) gedruckt wird, um das eine oder die mehreren Hilfsmerkmale (306, 308) einzuschließen.

8. Gussverfahren nach Anspruch 7, ferner umfassend das Entfernen des einen oder der mehreren Hilfsmerkmale (306, 308) aus dem einteilige Kern (300) vor dem Gießen des Materials in die Form.

9. Gussverfahren nach Anspruch 7 oder Anspruch 8, wobei das eine oder die mehreren Hilfsmerkmale (306, 308) eine Basis (308) einschließen.

10. Gussverfahren nach einem der Ansprüche 7 bis 9, wobei das eine oder die mehreren Hilfsmerkmale (306, 308) eine Verbindungsstange (306) einschließen.

11. Gussverfahren nach einem der Ansprüche 7 bis 10, wobei die dreidimensionale Druckdatei Spezifikationen für einen kombinierten Zylinderkopf- und Block-Kern (302) einschließt, und wobei der einteilige Kern (300) den kombinierten Zylinderkopf- und Block-Kern (302) einschließt.

12. Gussverfahren nach einem der Ansprüche 7 bis 11, wobei die dreidimensionale Druckdatei Spezifikationen für eine Vielzahl von Gasentlüftungen (304) einschließt, die durch den einteiligen Kern (300) angeordnet sind, und wobei der einteilige Kern (300) gedruckt wird, um die Vielzahl von Gasentlüftungen (304) einzuschließen.

## Revendications

1. Procédé de moulage pour la fabrication d'un moteur (100), le procédé de moulage comprenant :
le versement d'un matériau dans l'état liquide dans un moule autour d'un noyau en une seule pièce (300) à l'intérieur du moule, dans lequel une forme interne du moule correspond à une forme externe du moteur (100), et dans lequel une forme externe du noyau en une seule pièce (300) correspond à une forme interne du moteur (100) ; et
le fait de solidifier le matériau pour créer un moulage qui présente une forme externe qui correspond à la forme interne du moule et qui présente une forme interne qui correspond à la forme externe du noyau en une seule pièce (300).

2. Procédé de moulage selon la revendication 1, dans lequel le moteur (100) comprend une portion de tête de cylindre (102) et une portion de bloc (104).

3. Procédé de moulage selon la revendication 2, dans lequel la forme externe du noyau en une seule pièce (300) correspond à une combinaison d'une forme interne de la portion de tête de cylindre (102) et d'une forme interne de la portion de bloc (104).

4. Procédé de moulage selon la revendication 2 ou 3, dans lequel la forme interne du moule correspond à une combinaison d'une forme interne de la portion de tête de cylindre (102) et d'une forme interne de la portion de bloc (104).

5. Procédé de moulage selon l'une quelconque des revendications précédentes, comprenant en outre la génération du noyau en une seule pièce (300) par impression du noyau en une seule pièce (300) conformément à des spécifications dans un fichier d'impression tridimensionnelle.

6. Procédé de moulage selon la revendication 5, dans lequel les spécifications correspondent à chaque caractéristique d'intérieur creux du moteur (100).

7. Procédé de moulage selon la revendication 5 ou 6, dans lequel le fichier d'impression tridimensionnelle inclut des spécifications pour une ou plusieurs caractéristiques accessoires (306, 308), et dans lequel le noyau en une seule pièce (300) est imprimé pour inclure les une ou plusieurs caractéristiques accessoires (306, 308).

8. Procédé de moulage selon la revendication 7, comprenant en outre l'enlèvement des une ou plusieurs caractéristiques accessoires (306, 308) vis-à-vis du noyau en une seule pièce (300) avant de verser le matériau dans le moule.

9. Procédé de moulage selon la revendication 7 ou 8, dans lequel les une ou plusieurs caractéristiques accessoires (306, 308) incluent une base (308).

10. Procédé de moulage selon l'une quelconque des revendications 7 à 9, dans lequel les une ou plusieurs caractéristiques accessoires (306, 308) incluent une barre de liaison (306).

11. Procédé de moulage selon l'une quelconque des revendications 7 à 10, dans lequel le fichier d'impression tridimensionnelle inclut des spécifications pour un noyau de tête de cylindre et de bloc combinés (302), et dans lequel le noyau en une seule pièce (300) inclut le noyau de tête de cylindre et de bloc combinés (302).

12. Procédé de moulage selon l'une quelconque des revendications 7 à 11, dans lequel le fichier d'impression tridimensionnelle inclut des spécifications pour une pluralité d'évents gazeux (304) qui sont disposés au travers du noyau en une seule pièce (300), et dans lequel le noyau en une seule pièce (300) est imprimé pour inclure la pluralité d'évents gazeux (304).
